# EUROPÄISCHE PATENTANMELDUNG

(11) **EP 2 275 196 A2**
(43) Veröffentlichungstag der Anmeldung: **19.01.2011**
(21) Anmeldenummer: 10401099.6
(22) Anmeldetag: 13.07.2010
(51) Int. Cl.: B01F 7/00, B66D 1/44, B66D 1/48, B66F 7/04

(54) **Höhenverstellvorrichtung für getauchtes Rühr- oder Pumpwerk**

(30) Priorität: 15.07.2009 DE 202009005024 U
(71) Anmelder: MT-Energie GmbH & Co. KG, 27404 Zeven (DE)
(72) Erfinder: Martens, Christoph, 27404 Rockstedt (DE); Behrens, Jan, 27404 Seedorf (DE); Böschen, Jörg, 27412 Bülstedt (DE)
(74) Vertreter: Hansen, Jochen

(57) **Zusammenfassung**

Die Erfindung betrifft eine Höhenverstellvorrichtung (1) mit einem Führungssystem (5) und einem Höhenverstellmittel für ein Rührwerk (2) oder Pumpwerk, wobei das Rührwerk (2) oder Pumpwerk in einem Behälter (3), nämlich einem Lagertank, einem Klärbehälter, einem Gärbehälter, insbesondere einem Fermenter, oder dergleichen, gefüllt mit einer zu rührenden oder zu pumpenden Flüssigkeit (4), innerhalb der Flüssigkeit (4) angeordnet ist und das Rührwerk (2) oder Pumpwerk an dem Führungssystem (5) mit dem Höhenverstellmittel in der Höhe verstellbar ist.

## Beschreibung

Die Erfindung betrifft eine Höhenverstellvorrichtung mit einem Führungssystem und einem Höhenverstellmittel für ein Rührwerk oder Pumpwerk, wobei das Rührwerk oder Pumpwerk in einem Behälter, nämlich einem Lagertank, einem Klärbehälter, einem Gärbehälter, insbesondere einem Fermenter, oder dergleichen, gefüllt mit einer zu rührenden oder zu pumpenden Flüssigkeit, innerhalb der Flüssigkeit angeordnet ist und das Rührwerk oder Pumpwerk an dem Führungssystem mit dem Höhenverstellmittel in der Höhe verstellbar ist. Unter Rührwerken sind insbesondere Tauchmotorrührwerke, sowie Langachsrührwerke oder dergleichen, zumindest jedoch eine angetriebene Welle mit einem Propeller, zu verstehen, die an einem Führungssystem in einem Behälter montiert sind und in der Höhe variabel einstellbar sind. Unter Pumpwerken sind insbesondere Tauchmotorpumpen, Förderpumpen oder dergleichen zu verstehen, die an einem Führungssystem in einem Behälter montiert sind und in der Höhe variabel einstellbar sind und so die innerhalb des Behälters befindliche Flüssigkeit Rühren, Fördern oder Umpumpen können.

Im Stand der Technik sind unterschiedliche Höhenverstellvorrichtungen für Rührwerke bekannt. Als Höhenverstellvorrichtung bei derartigen Rührwerken, beispielsweise im Bereich der Bio-Gas-Anlagen, ist besonders ein am Mast entlang geführtes Drahtseil zu nennen, das durch eine gasdichte Seildurchführung in der Behälteraußenwand nach Außen geführt ist, und auf der Außenseite des Behälters mit Hilfe einer aufwickelnden Seilwinde aufgewickelt wird. Hierbei wird das Rührwerk durch das Seil nach oben gezogen und so in seiner Höhenposition verändert. Ein Absenken des Rührwerks erfolgt durch das Abwickeln des Seils, so dass sich das Rührwerk durch dessen Eigengewicht am Mast nach unten bewegt.

Aus der DE 197 32 198 C1 ist eine Hubvorrichtung für ein Rührwerk in einem dichten Behälter bekannt, wobei die Vorrichtung mit Hilfe einer Seilwinde, die innerhalb des Behälters angeordnet ist, realisiert ist. Hierbei wird die Seilwinde über ein elektrisches Aggregat, beispielsweise einen Elektromotor angetrieben. Der besondere Vorteil liegt hierbei auf dem Verzicht einer gasdichten Seildurchführung durch eine Behälterwand, um das Seil, welches das Rührwerk nach oben zieht bzw. es absinken lässt, nach draußen zu führen. Es muss lediglich eine Versorgungsleitung für den Seiltrommelantrieb nach außen geführt werden.

Weiter ist aus der DE 10 2007 009 451 A1 die Elektrifizierung der Seilwinde, sowie eine automatische Höhenanpassung bekannt. In einem Behälter wird ein Füllstandsmesssignal detektiert und mit Hilfe einer Steuereinrichtung in Steuerimpulse für die Höhenverstellvorrichtung umgewandelt, so dass eine automatische Höhenanpassung eines Rührwerks innerhalb des mit einem Substrat gefüllten Behälters erfolgen kann. Derartige Sensoren zum Detektieren eines Füllstandsmesssignals sind beispielsweise mechanisch arbeitende Sensoren wie Schwimmer oder Verdrängungskörper, als auch Grenzwertschalter oder dergleichen. Alternativ können auch optische oder akustische Sensoren verwendet werden. Die Höhenanpassung erfolgt über eine mit Hilfe eines Elektromotors angetriebene Seilwinde, die im oder außerhalb des Behälters angeordnet ist.

Aus dem praktischen täglichen Einsatz hat sich dagegen in den letzten Jahren die außerhalb des Behälters angeordnete aufwickelnde Seilwinde, die üblicherweise handbetrieben wird, als Quasi-Standard etabliert, insbesondere dadurch, dass diese einfach per Hand zu bedienen ist und ein gewisses Maß an Zugkraftkontrolle vorhanden ist, um ein Verklemmen des Rührwerks am Mast auszuschließen. Ein Verklemmen des Rührwerks am Mast während des Hochziehens führt unter Umständen zum Abreißen des Seils, was hohe Reparaturkosten und Ausfallzeiten nach sich ziehen kann.

Beim Absenken des Rührwerks besteht die Gefahr, dass sich das Rührwerk am Mast bei der der Abwärtsbewegung verklemmt bzw. verkeilt, wobei das Seil nicht mehr durch das Eigengewicht des Rührwerks auf Spannung gehalten wird. Hierdurch kann das nunmehr lose umherschlingernde Seil von dem rotierenden Propeller des Rührwerks erfasst werden und erheblich beschädigt bzw. sogar abgerissen werden. Eine derartige Beschädigung kann einen langen Ausfall zur Folge haben.

Ausfälle an den Seilen und den Seilwinden zeigen jedoch, dass sich diese Lösungen als nicht durabel erweist, so dass ein jahrelanger, bzw. jahrzehntelanger Betrieb der Anlage nicht sichergestellt werden kann.

Insbesondere werden die Behälter gerade im Bio-Gas-Anlagenbau immer höher, was zu größeren Hüben des Rührwerks führt. Diese großen Hübe können zwar mit bisheriger Technik überwunden werden, führen jedoch zu höherer Abnutzung und somit zu kürzeren Standzeiten der im Stand der Technik bekannten Höhenverstellvorrichtungen.

Ein typisches Problem bei der Verwendung von Seilwinden ist die fehlende Ablesbarkeit der Position des Rührwerks am Mast, da zum einen das Rührwerk innerhalb des geschlossenen Behälters angeordnet ist und zudem in einer trüben Flüssigkeit, wie beispielsweise in einer Biogasanlage innerhalb eines Fermenters, nicht mit den Augen zu erkennen ist. Beim Aufwickeln eines Seils auf einer Seiltrommel ändert sich permanent die Länge des aufgewickelten Seils pro Umdrehung, da sich der innere Radius durch das aufgewickelte Seil erhöht. Je mehr Seil aufgewickelt wird, desto mehr Seil wird pro Umdrehung auf der Seiltrommel aufgewickelt, so dass keine kontinuierliche Skala angelegt werden kann, um festzustellen, wie hoch das Rührwerk aktuell steht.

Des Weiteren kann das Seil sehr schwer ohne Hilfsmittel, wie beispielsweise Führungsstäbe oder Aufwickelhilfen, auf der Seiltrommel aufgewickelt werden. Ohne Hilfsmittel wickelt sich das Seil mit Überschneidungen und Überkreuzungen auf der Seiltrommel auf. Nicht nur dass sich die Länge des aufzuwickelnden Seils drastisch pro Seiltrommelumlauf erhöht, vielmehr nimmt das Seil durch das Überkreuzen einen Schaden. Die Lebensdauer eines schlecht aufgewickelten Seils reduziert sich dramatisch, was letztendlich dazu führt, dass die Seilwinde mit dem Seil nicht mehr zum Heben und Senken des Rührwerks verwendet werden kann.

Seilbeschädigungen durch ungleichmäßiges Aufwickeln des Seils auf der Seiltrommel verringern die Standzeiten des Seils, die auch nicht durch entsprechende Führungshilfen zum gleichmäßigen Aufwickeln des Seils ausgeglichen werden können.

Das größte Problem beim Hoch- und Runterbewegen des Rührwerks am Mast ist jedoch die Einstellung der Zugkraft des Zugseils. Bei einer handbetriebenen Seilaufwicklung kann der Benutzer nach einer gewissen Erfahrungszeit die Zugkraft gut einschätzen, die er über die Kurbel auf die Seiltrommel überträgt. Bei einem Verklemmen des Rührwerks am Mast ist der Bediener sofort in der Lage dieses Festklemmen an Hand der Schwergängigkeit bzw. Leichtgängigkeit festzustellen und entsprechende Gegenmaßnahmen einzuleiten, um das Abreißen des Seils durch Überlastung mit dem Hebezeug bzw. durch Erfassen des losen Seils durch den rotierenden Propeller zu verhindern. Das Verklemmen und Verkeilen des Rührwerks am Mast beim Heben ist an sich eher unproblematisch, da sich das Rührwerk durch dessen Eigengewicht beim gezielten Absenken mit Hilfe des Seils von alleine löst bzw. beim Absenken des Rührwerks durch gezieltes Anheben wieder löst. Reißt jedoch das Seil würde dies zu aufwendigen und kostenintensiven Reparaturen sowie langen Ausfallzeiten führen.

Bei Verwendung eines Elektromotors zum Antreiben der Seiltrommel ist eine einfache und wirksame automatische Abschaltung bei zu großen bzw. zu kleinen Drehmomenten bzw. Zugkräften nicht einfach realisierbar, so dass es beim Verklemmen bzw. Verkeilen des Rührwerks am Mast während des Hochziehens und Absenkens zum Abreißen des Seils kommen kann. Problematisch ist hierbei insbesondere die Veränderung des innerhalb der Seilwinde realisierten Drehmoments durch den Elektromotor, da dieses sich durch das aufgewickelte Seil und den damit veränderten Umfang permanent ändert.

Aufgabe der Erfindung ist es, eine Höhenverstellvorrichtung für ein Rührwerk anzugeben, mit dem es möglich ist, auf einfachste Weise die Höhenverstellung des Rührwerks innerhalb eines Behälters vorzunehmen, wobei eine langlebige Konstruktion mit hoher Wartungsfreiheit, langer Standzeit und hoher Sicherheit gewährleistet ist.

Gelöst wird diese Aufgabe mit einer Vorrichtung nach Anspruch 1.

Dadurch, dass das Höhenverstellmittel einen Linearantrieb und ein außerhalb des Behälters angeordnetes Steuerungsmittel ist, wobei ein befestigtes Ende des Linearantriebs in einer ortsfesten Aufnahme angeordnet ist und ein distales Ende, gegenüber dem befestigten Ende des Linearantriebs über eine Wirkverbindung mit dem Rührwerk oder Pumpwerk verbunden ist, ist es möglich, das Rührwerk bzw. das Pumpwerk an dem Führungssystem in der Höhe zu verstellen. Dabei bedeutet Linearantrieb ein Antrieb, der zu einer translatorischen Bewegung führt. Dies kann beispielsweise ein Zahnstangenantrieb, ein Kugelgewindetrieb, ein Rollengewindetrieb, ein Hydraulikzylinder, ein Pneumatikzylinder sowie elektromechanischer Linearantrieb, wie beispielsweise Linearmotoren oder Linearaktoren umfassen. Steuerungsmittel sind für die Ansteuerung und Versorgung des jeweiligen Linearantriebs erforderliche Mittel, beispielsweise Hydraulik/Pneumatik-Druckerzeugungsmittel, Spannungsversorgungen und dergleichen.

Dadurch, dass der Linearantrieb ein Hydraulikzylinder und ein außerhalb des Behälters angeordnetes Hydraulikdruck-Erzeugungsmittel ist, kann eine technisch einfache, äußerst robuste und mit hoher Stellkraft versehene Höhenverstellung bewirkt werden.

Die Verwendung einer hydraulischen Höhenverstellung wird insbesondere von der Fachwelt der Bio-Gas-Branche als nicht sinnvoll erachtet. Hierzu wird an dieser Stelle insbesondere auf die "Handreichung Biogasgewinnung und -nutzung" der Fachagentur Nachwachsende Rohstoffe in der aktuellen Fassung verwiesen. Hiernach wird die Höhenverstellung ausschließlich über einen Galgen, eine Seilwinde und ein Leitprofil realisiert. Überraschenderweise lässt sich jedoch mit dem Einsatz des Hydraulikzylinders ein sicheres Verstellen des Rührwerks in der Höhe realisieren.

Hierbei kann der Hydraulikzylinder innerhalb des Behälters derart angeordnet sein, dass dessen distales Ende über die Wirkverbindung mit dem Rührwerk verbunden ist und beim Druckbeaufschlagen des Hydraulikzylinders eine entsprechende Bewegung des distalen Endes, hervorgerufen durch die Bewegung des Kolbens, auf das Rührwerk übertragen wird und so eine Verstellung in der Höhe des Rührwerks erfolgt. Die Wirkverbindung kann nun beispielsweise eine direkte Verbindung des distalen Endes mit dem Rührwerk sein, wobei der Hydraulikzylinder beispielsweise drückend unterhalb des Rührwerks oder alternativ ziehend oberhalb des Rührwerks angeordnet ist.

Um eine entsprechende maximale Höhenverstellung des Rührwerks zu ermöglichen, kann der Hydraulikzylinder beispielsweise in einer Ausbuchtung innerhalb des Behälters nach unten oder in eine Ausbuchtung innerhalb des Behälters nach oben angeordnet sein. Insbesondere können auch teleskopierbare und ineinander verschiebbare Kolben verwendet werden.

Von außen ist der Hydraulikzylinder über das Hydraulikdruckerzeugungsmittel und einem dazwischen geschalteten Betätigungshebel bzw. Betätigungselement steuerbar, so dass bei Druckbeaufschlagung bei der drückenden Zylinderausgestaltung das Rührwerk an dem Mast nach oben gefahren wird und bei Druckreduzierung das Rührwerk wieder nach unten gefahren wird. Bei Ausgestaltung als ziehender Zylinder ist beispielsweise die Ausgestaltung des Hydraulikzylinders als doppelt wirkender Zylinder mit zwei gegenüberliegenden Kolbenflächen besonders bevorzugt zu verwenden. Hierdurch wird auch das hohe Gewicht des Rührwerks auf einfachste Weise am Mast bewegt.

Die Bestimmung der Höhe durch geeignete Mess-Sensorik am Hydraulikzylinder erfolgen, wobei die Mess-Sensorik die Längenänderung bzw. den Zylinderhub detektiert. Hierdurch kann von außen auf den innerhalb des Behälters angeordneten und innerhalb eines nicht durchsichtigen Substrats befindlichen Hydraulikzylinder dessen Höhe ermittelt werden.

Alternativ kann die Höhe bzw. die Höhenänderung mit Hilfe einer durchgehenden Kolbenstange mit entsprechender Skala ermittelt werden, wobei die durchgehende Kolbenstange im Bereich des befestigten Endes des Hydraulikzylinders ablesbar bzw. detektierbar ist.

Eine Anordnung des Hydraulikzylinders außerhalb des Behälters ist ebenfalls möglich, wobei hierbei eine entsprechende Wirkverbindung realisiert werden muss, mittels der die Hubbewegung des Hydraulikzylinders auf das Rührwerk übertragen wird, so dass die Hubbewegung eine Verstellung der Höhe des Rührwerks nach sich zieht. Diese Wirkverbindung kann durch Hebel, Stangen oder dergleichen realisiert werden.

Besonders vorteilhaft ist, dass die Abwärtsbewegung bei Verringerung des Drucks durch das Eigengewicht des Rührwerks bzw. des Pumpwerks am Mast erfolgt, wobei das Seil nicht freigegeben bzw. lose umherschlingert, da das Seil permanent auf Spannung bzw. Zug durch das Eigengewicht des Rührwerks bzw. des Pumpwerks gehalten ist. Eine Zerstörung des Seils durch den Propeller des Rührwerks ist somit ausgeschlossen.

Bevorzugt ist ein einstellbares Überdruckventil zur Begrenzung der Kraft des Hydraulikzylinders innerhalb des Hydraulik-Systems angeordnet, um bei einem bestimmten vorgegeben Hydraulikdruck innerhalb des Systems den wirkenden Hydraulikdruck bei dem Hydraulikzylinder zu begrenzen. Hierdurch ist es möglich, einer Schädigung durch das Verklemmen oder Verkeilen des am Führungssystem hoch- und runterbewegbaren Rührwerks entgegenzuwirken. Wenn das Rührwerk am Führungssystem verklemmt, wird der Hydraulikdruck über das Überdruckventil begrenzt. Durch Reduzierung des hydraulischen Drucks kann sich das Rührwerk durch dessen Eigengewicht aus der Verklemmung lösen. Einer Schädigung der Höhenverstellvorrichtung durch das Verklemmen des Rührwerks am Führungssystem wird so effektiv entgegengewirkt, so dass das Rührwerk am Führungssystem wieder freigängig bewegbar wird. Das hier vorgesehene einstellbare Überdruckventil ist als Zusatz-Überdruckventil zu verstehen. Es dient nicht der Absicherung des hydraulischen Systems an sich, sondern nur der Begrenzung der Zug- oder Druckkraft des Hydraulikzylinders. Das komplette Hydrauliksystem kann für wesentlich höhere Drücke ausgelegt werden, wobei hierzu eine zusätzliche Absicherung vorgesehen ist bzw. vorgesehen sein kann.

Wenn das Hydraulikdruck-Erzeugungsmittel eine handbetriebene Pumpe, ein Hydraulikaggregat und/oder ein hydraulischer Druckspeicher ist, wobei das Hydraulikaggregat ein elektro-hydraulisches oder ein pneumatisch-hydraulisches Hydraulikaggregat ist, lässt sich der Hydraulikdruckzylinder auf einfachste Weise mit einem hydraulischen Druck beladen. Die entsprechenden Hydraulikdruckerzeugungsmittel können auch in unterschiedlichen Ausbaustufen durch entsprechende Alternativen ersetzt werden, so dass zunächst mit einer einfachen handbetriebenen Pumpe begonnen werden kann und später auf bis auf ein elektrohydraulisches oder presslufthydraulisches Hydraulikaggregat erhöht werden kann.

Um bei größeren Anlagen mehrere Rührwerke innerhalb eines Behälters oder jeweils ein oder mehrere Rührwerke in einer Vielzahl gleicher oder auch unterschiedlicher Behälter in der Höhe verstellen zu können, ist das Hydraulikdruck-Erzeugungsmittel mit mehreren Hydraulikzylindern verbunden, wobei jeweils einzeln ansteuerbare Ventile zwischen den jeweiligen Hydraulikzylindern und dem Hydraulikdruckerzeugungsmittel angeordnet sind. Hierbei können von einem zentral angeordneten Hydraulikdruckerzeugungsmittel Hydraulikdruckleitungen zu den entsprechenden Hydraulikzylindern geführt werden, so dass bei der Anordnung von mehreren Rührwerken und entsprechenden Höhenverstellvorrichtungen mittels Hydraulikzylindern die Rührwerke gleichzeitig in der Höhe einstellbar sind oder aber eine Vielzahl von Rührwerken in mehreren Behältern jeweils einzeln oder auch gemeinsam ansteuerbar sind. Hierzu können unterschiedlichste im Stand der Technik bekannte Regelungs- und Einstellmöglichkeiten vorgesehen werden.

Dadurch, dass der Hydraulikzylinder eine Schutzummantelung aufweist, wobei die Schutzummantelung wenigstens zwei übereinanderschiebbare Einzelummantelungen, nämlich mindestens eine innere und äußere Einzelummantelung, umfasst, wird der Hydraulikzylinder vor der Umgebung geschützt. Mittels dieser Schutzumwandlung ist der Hydraulikzylinder ausreichend gegen Umwelteinflüsse und/oder gegen Einflüsse des innerhalb des Behälters angeordneten Substrats oder der Flüssigkeit geschützt. Eine Anordnung des Hydraulikzylinders teilweise innerhalb als auch außerhalb des Behälters, nämlich die Anordnung des befestigten Endes außerhalb des Behälters und die Anordnung des distalen Endes innerhalb des Behälters erscheint ebenfalls geeignet, da so auf einfachste Weise der Hydraulikzylinder mit den entsprechenden Hydraulikdruckleitungen versorgt werden kann und nur eine Durchführung abgedichtet werden muss.

Dadurch, dass an dem Hydraulikzylinder, bevorzugt auf einer der Einzelummantelungen, besonders bevorzugt auf der Außenseite der inneren Einzelummantelung, eine Skala aufgebracht ist, die den Hub anzeigt, kann die exakte Auslenkung bzw. Höhe des Rührwerks innerhalb des Behälters festgestellt werden. Die Skala kann optisch erkannt werden oder aber auch mittels Sensoren abgetastet werden. Hierzu bieten sich die im Stand der Technik weit verbreiteten Sensoren an, um die Auslenkung des Hydraulikzylinders festzustellen.

Wenn die Wirkverbindung mindestens eine Umlenkvorrichtung aufweist, kann die Einbauorientierung des Hydraulikzylinders in Bezug auf die Hebe- und Absenkrichtung des Rührwerks in einem Winkel angeordnet sein. Beispielsweise kann der Hydraulikzylinder horizontal, senkrecht oder aber auch umgekehrt parallel zur Hebe- und Absenkrichtung des Rührwerks angeordnet werden, wobei eine entsprechende Bewegung des distalen Endes des Hydraulikzylinders eine entsprechend geplante Bewegung des Rührwerks nach oben respektive nach unten nach sich zieht. Insbesondere können Hebel und Umlenkhebel vorgesehen sein.

Um eine konstruktiv einfache wie auch durable Wirkverbindung zu realisieren, die es ermöglicht, die Hubbewegung des Hydraulikzylinders nicht nur auf einem direkten Weg zu übertragen, ist die Wirkverbindung ein Seil mit einem Rührwerksende und einem Arbeitsende, wobei das Rührwerksende an dem Rührwerk und das Arbeitsende an dem distalen Ende des Hydraulikzylinders befestigt ist. Der Hydraulikzylinder kann nunmehr entkoppelt von dem Rührwerk angeordnet sein, so dass die Hubbewegung über das Seil übertragen wird.

Dadurch, dass die Wirkverbindung ein Seil mit einem Rührwerksende und einem Arbeitsende ist, wobei das Rührwerksende an dem Rührwerk und das Arbeitsende an einem ortsfesten Haltepunkt befestigt ist, bevorzugt am Behälter, am Boden, an einem Halter, am Zylinder des Hydraulikzylinders oder an der ortsfesten Aufnahme des Hydraulikzylinders, und am distalen Ende des Hydraulikzylinders eine erste Blockaufnahme, umfassend eine Rolle, angeorndet ist, wobei das Seil U-förmig um die Rolle geführt ist, ist eine Kraftverteilung mit Hilfe eines ersten einfach aufteilenden Flaschenzugs möglich. Hierbei vollzieht der Hydraulikzylinder einen Hub, der nur halb so weit ist, wie die Hubbewegung des Rührwerks am Mast. Es muss allerdings im Gegensatz zu einer direkten Wirkverbindung des Hydraulikzylinders und dem Rührwerk die doppelte Kraft aufgewandt werden, um das Rührwerk dieselbe Höhe nach oben zu bewegen.

Wenn neben der ersten Blockaufnahme am distalen Ende des Hydraulikzylinders eine zweite Blockaufnahme am befestigten Ende des Hydraulikzylinders vorgesehen ist, wobei die erste und zweite Blockaufnahme jeweils mindestens eine Rolle aufweist und das Seil über die Rollen in entsprechender Einscherung geführt ist, so dass ein Flaschenzug ausgebildet ist, wobei der Abstand der Blockaufnahmen durch den Hydraulikzylinder veränderbar ist, kann die Hubbewegung des Hydraulikzylinders um ein vielfaches, entsprechend der Anzahl der Einscherungsdurchläufe des Seils, reduziert werden, so dass der Hydraulikzylinder zwischen Nullstellung und maximaler Auslenkung weniger Platz in Anspruch nimmt. Beispielsweise würde bei einer 6-fachen Umlenkung mit Hilfe des Flaschenzugs eine 1-Meter-Hubbewegung des Hydraulikzylinders in eine 6-Meter-Hubbewegung des Rührwerks am Mast mit Hilfe des Seils realisiert werden. Für diese Bewegung ist allerdings die sechsfache Kraft im Vergleich zur direkten Wirkverbindung des Hydraulikzylinders mit dem Rührwerk notwendig. Je nach Bedarf kann die Anzahl der Einscherungen bzw. der Umlenkungen variiert werden, so dass ein optimales Weg-Kraft-Profil für die gewünschte Hebevorrichtung gefunden wird.

Dadurch, dass die Umlenkvorrichtung für das Seil mindestens eine Umlenkrolle ist, wird das Seil weiter geschont, da die Umlenkrolle die schonenste Behandlung eines Seil ist, wenn dieses umgelenkt wird.

Als Alternative zu dem Seil kann auch eine Kette oder dergleichen verwendet werden. Hierbei kommt es auf die Kräfte an, die maximal von dem Hydraulikzylinder auf das Rühwerk übertragen werden müssen. Unter dem Seil ist selbstverständlich ein Stahlseil zu verstehen, welches in der Dimensionierung auf den entsprechenden Fall abgestimmt ist. Gleichwohl kann das Seil auch aus einem Kunststoff, einem Gurt oder einem Flachband oder dergleichen bestehen.

Wenn der Hydraulikzylinder außerhalb des Behälters angeordnet ist und eine gasdichte Seildurchführung in dem Behälter vorgesehen ist, kann der Hydraulikzylinder außerhalb eines gasdichten Behälters, beispielsweise eines Fermenters einer Bio-Gas-Anlage angeordnet sein, so dass die Hydraulikkomponenten allesamt zugänglich sind. Gleichzeitig kann die Skala auf der Ummantelung auf einfachste Weise mit den Augen abgelesen werden.

Nachfolgend wird ein Ausführungsbeispiel der erfindungsgemäßen Höhenverstellvorrichtung anhand der beiliegenden Zeichnungen detailliert beschrieben.

Darin zeigen:
- Fig. 1: eine schematische Darstellung eines Ausführungsbeispiels der erfindungsgemäßen Höhenverstellvorrichtung in einem Fermenter einer Bio-Gas-Anlage;
- Fig. 2: eine schematische Darstellung des Hydraulikzylinders als drückender Hydraulikzylinder;
- Fig. 3: eine schematische Darstellung der Blockaufnahmen des Hydraulik- zylinders in einer Seitenansicht entsprechend dem in Fig. 2 dargestellten Hydraulikzylinder;
- Fig. 4: eine weitere Ausgestaltung des Höhenverstellmittels als ziehender Hydraulikzylinder und
- Fig. 5: eine schematische Darstellung des Hydraulikzylinders mit einer Ummantelung.

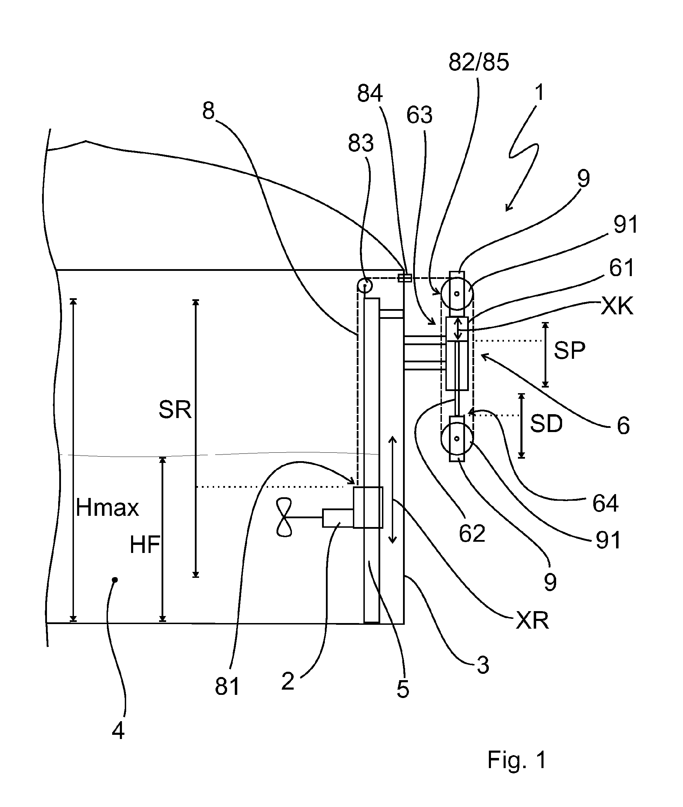

Die Fig. 1 zeigt eine schematische Darstellung eines Ausführungsbeispiels der erfindungsgemäßen Höhenverstellvorrichtung 1 in einem Fermenter einer Bio-Gas-Anlage, dem Behälter 3.

In dem Behälter 3 ist das Rührwerk 2 angeordnet. Das Rührwerk 2 ist an dem Führungssystem 5 in Richtung der Rührwerksbewegung XR hoch- und runterbeweggbar, wobei das Rührwerk 2 in der Höhe um den Rührwerkhub SR verstellt werden kann. Das Führungssystem 5 ist mittels eines oder mehrere Halter an der Wandung des Behälters 2 montiert, bevorzugt auf dem Boden aufsetzend und mit einer oberen Halterung befestigt.

In dem Behälter 3 befindet sich eine Flüssigkeit 4, beispielsweise eine Gärflüssigkeit. Der Behälter 3 ist bis zu einer Füllstandshöhe HF mit der Flüssigkeit 4 befüllt, wobei die Füllstandshöhe HF der Flüssigkeit 4 innerhalb des Behälters 3 bedingt durch Entnahme oder Zugabe von Material bzw. Flüssigkeit schwanken kann. Die Füllstandshöhe HF ist jedoch durch eine maximale Füllstandshöhe Hmax innerhalb des Behälters 3 begrenzt.

An dem Rührwerk 2 ist ein Seil 8 mit einem Rührwerksende 81 kraftschlüssig verbunden. Dieses Seil ist weiter über eine am oberen Ende des Führungssystems 5 angeordnete Umlenkrolle 83 geführt. Anschließend ist das Seil 8 durch eine gasdichte Seildurchführung 84 geführt, wobei sich die gasdichte Seildurchführung 84 im oberen Bereich, zumindest oberhalb der maximalen Füllstandshöhe Hmax, in der Wandung des Behälters 3 befindet. Auf der Außenseite des Behälters 3 ist das Seil 8 zu einem Hydraulikzylinder 6, der als Höhenverstellmittel dient, geführt und steht mit diesem in Wirkverbindung.

Der Hydraulikzylinder 6 besteht aus einem Zylinder 61 und einem Kolben 62 mit einer Kolbenstange. Am Ende der Kolbenstange befindet sich das distale Ende 64. Der Zylinder 61 bzw. der Kopfbereich des Zylinders 61 stellt das befestigte Ende 63 des Hydraulikzylinders 6 dar. Der Hydraulikzylinder 6 ist mit dem Zylinder 61 über eine Halterung an der Außenwandung des Behälters 3 ortsfest befestigt, wobei die Halterung bzw. der Behälter 3 als Widerlager für den Hydraulikzylinder 6 dient..

Der Kolben 62 und die Kolbenstange des Hydraulikzylinders 6 können bei Druckbeaufschlagung eine Bewegung entsprechend der Kolbenbewegung XK vollziehen. Hierbei verändert sich die Gesamtlänge des Hydraulikzylinders 6 und dadurch der Abstand der Blockaufnahmen Δx (siehe unten). Inbesondere erfolgt ein Hub des distalen Endes SD, der genau dem Kolbenhub SP entspricht.

Am Kopfbereich des Zylinders 61 des Hydraulikzylinders 6, dem befestigten Ende 63, ist eine Blockaufnahme 9 vorgesehen. Eine weitere Blockaufnahme 9 ist am distalen Ende 64 des Hydraulikzylinders 6 angeordnet. Die Blockaufnahmen 9 weisen Rollen 91 auf, über die das Seil 8 geführt sind.

Der Hydraulikzylinder 6 ist mit dem Rührwerk 2 über das Seil 8 verbunden. Das Seil 8 weist hierbei das Rührwerksende 81 auf, das an dem Rührwerk 2 kraftschlüssig angeordnet ist und über die Umlenkrolle 83 am oberen Ende des Führungssystems 5 von einer senkrechten Orientierung in eine horizontale Orientierung umgelenkt wird und anschließend den Innenraum des Behälters 3 durch die gasdichte Seildurchführung 84 nach außen verlässt. Auf der Außenseite des Behälters 3 wird das Seil 8 über die Rolle 91 der oberen Blockaufnahme 9 geführt, wobei die Rolle 91 gleichzeitig als Umlenkrolle dient, um das Seil 8 aus einer horizontalen Orientierung in eine senkrechte Orientierung zu überführen. Alternativ kann auch eine weitere Umlenkrolle 83 separat angeordnet sein.

Nach dem ersten Kontakt mit der Rolle 91 der oberen Blockaufnahme 9 wird das Seil U-förmig um die Rolle 91 der unteren Blockaufnahme 9 geführt und anschließend nach oben geleitet, wo es in diesem Ausführungsbeispiel an der Blockaufnahme 9 in einem Befestigungspunkt 85 endet. Dieses Ende stellt das Arbeitsende 82 des Seils 8 dar. Dieser Befestigungspunkt 85 dient als Widerlager für das Seil 8.

Zum Bewegen des Rührwerks 2 in Rührwerksbewegungsrichtung XR wird der Hydraulikzylinder 6 mit einem hydraulischen Öl druckbeaufschlagt. Hierbei vollzieht der Kolben 62 des Hydraulikzylinders 6 eine Kolbenbewegung XK. Durch die Bewegung des Kolbens 62 in Kolbenbewegungsrichtung XK wird die Kolbenstange entsprechend des Hubs des distalen Endes ausgefahren, so dass das Seil 8, welches permanent durch das Gegengewicht des Rührwerks 2 auf Spannung gehalten ist, derart bewegt wird, dass das Rührwerk 2 innerhalb des Behälters 3 nach oben bewegt wird.

Es bedarf in diesem Ausführungsbeispiel lediglich der Druckbeaufschlagung der Kolbenseite des Kolbens 62, die auf der kolbenstangenfernen Seite liegt. Hierdurch wird die Kolbenstange bei Druckbeaufschlagung ausgefahren. Bei Druckreduzierung bewirkt das Eigengewicht des Rührwerks 2 eine Zugkraft, die über das Seil 8 und über die Kraftumlenkung mittels der Rollen 91 und dem Befestigungspunkt 85 des Seils auf den Zylinder wirkt, so dass diese eine Rückbewegung der Kolbenstange und des Kolbens 62 in den Zylinder 61 hinein bewirkt. Es bedarf nicht eines doppelt wirkenden Hydraulikzylinders 6, um die Rückbewegung zu gewährleisten. Eine solche Ausgestaltung ist jedoch auch möglich und unter Umständen sinnvoll.

Dieses Ausführungsbeispiel arbeitet mit einem Faktor 2, der bedeutet, dass ein Hubbewegung um 1 Meter des Kolbens SP, bzw des distalen Endes SD eine 2 Meter Hubbewegung des Rührwerks SR bewirkt. Hierzu wird jedoch die doppelte Kraft benötigt, die nötig gewesen wäre, wenn eine direkte Wirkverbindung zwischen dem Hydraulikzylinder 6 und dem Rührwerk 2 bestanden hätte.

In diesem Ausführungsbeispiel ist der Hydraulikzylinder mit den dazugehörigen Komponenten des Seilzugs außerhalb des Behälters angeordnet. Gleichwohl kann der Hydraulikzylinder mit den dazugehörigen Komponenten auch sehr gut innerhalb des Behälters angeordnet werden, so dass nur das Hydraulikdruck-Erzeugungsmittel und die Bedienung außerhalb des Behälters angeordnet sind.

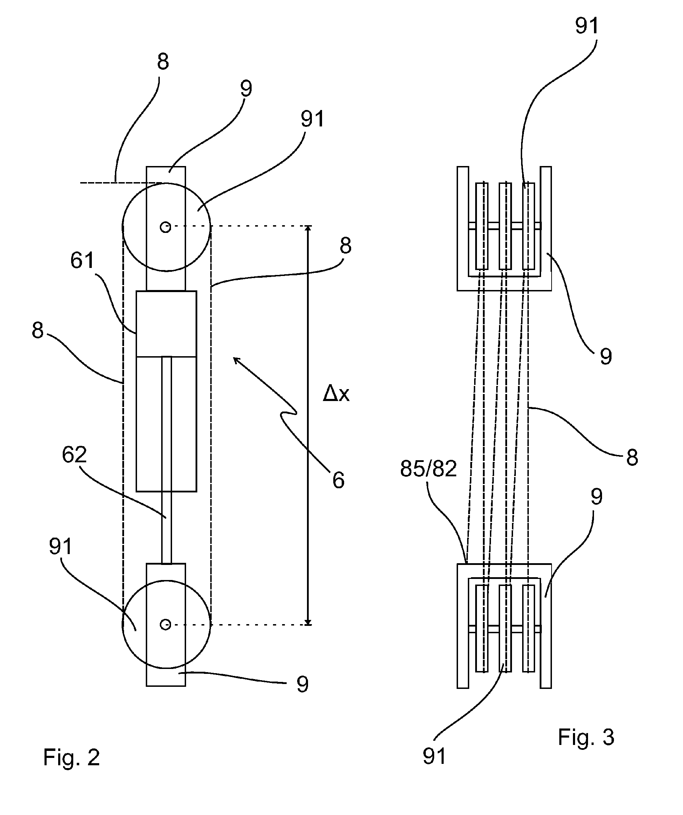

Fig. 2 und Fig. 3 zeigen eine schematische Darstellung des Hydraulikzylinders 6 als drückender Hydraulikzylinder in einer Draufsicht (Fig. 2) und einer Seitenansicht (Fig. 3).

Es sind die gleichen Bauteile und entsprechenden Bezugszeichen analog zu Fig. 1 verwendet. Jedoch handelt es sich hier nicht um einen einfach ausgestalteten Seilzug mit einem Faktor 2, sondern um einen Seilzug mit dem Faktor 6, da hier (vgl. Figur 3, Seitenansicht) sechs Rollen 91, aufgeteilt in jeweils drei Rollen pro Blockaufnahme vorgesehen sind.

Das Seil 8 wird mittels der entsprechenden Einscherung über die Rollen 91 der Blockaufnahmen 9 geführt und am Arbeitsende 82 in einen Befestigungspunkt 85 an der unteren Blockaufnahme 9 kraftschlüssig befestigt.

Bei der Druckbeaufschlagung des Hydraulikzylinders mit Hydrauliköl entfernen sich die Achsen der Rollen 91 der Blockaufnahmen 9 voneinander. Der Abstand der Blockaufnahmen Δx vergrößert sich. Hierdurch wird das Seil 8 am Rührwerksende 81 nach oben bewegt, was eine Aufwärtsbewegung des Rührwerks 2 am Führungssystem 5 nach sich zieht.

Zum Absenken des Rührwerks 2 wird Druck aus dem System des Hydraulikzylinders 6 verringert. Durch die Reduzierung des hydraulischen Drucks innerhalb des Systems bewegt sich der Kolben 62 mit der Kolbenstange wieder zurück in den Zylinder 61 des Hydraulikzylinders 6. Hierbei verringert sich der Abstand der Blockaufnahmen Δx wieder.

Entsprechend dem Verhältnis 1:6 wird das Rührwerk 2 abgesenkt. Mit dem Verhältnis 1:6 ist gemeint, dass bei einer Verringerung des Abstands Δx um 1 m das Rührwerk 2 um 6 m abgesenkt wird. Entsprechendes gilt für das Hochbewegen des Rührwerks 2 bei Druckbeaufschlagung des Hydraulikzylinders 6.

Fig. 3 zeigt entsprechend eine schematische Darstellung der Blockaufnahmen 9 mit den bereits in Fig. 2 genannten sechs Rollen 91 des Hydraulikzylinders 6 in einer Seitenansicht entsprechend dem in Fig. 2 dargestellten Hydraulikzylinder 6.

Das Seil 8 ist entsprechend der Einscherung über die sechs Rollen 91, jeweils drei Rollen 91 pro Blockaufnahme 9, geführt. Das Arbeitsende 82 ist am Befestigungspunkt 85 der unteren Blockaufnahme 9 befestigt.

Diese Anordnung stellt einen Flaschenzug dar, mit dem es möglich ist, mit Hilfe einer entsprechend höheren faktorisierten (in diesem Beispiel Faktor 6) erhöhten Kraft eine Bewegung des Kolbens 62 des Hydraulikzylinders 6 in eine Bewegung des Rührwerks 2 entsprechend einem 6-fachen Kolbenhub SP umzusetzen.

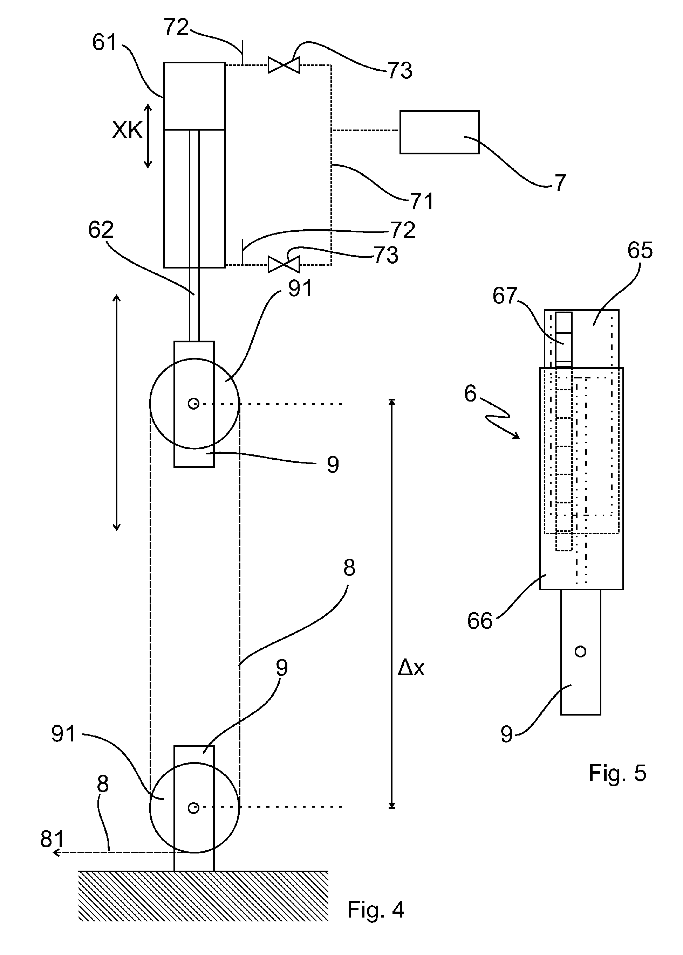

Fig. 4 zeigt eine weitere Ausgestaltung des Höhenverstellmittels, nämlich des Hydraulikzylinders 6 als ziehender Hydraulikzylinder.

Der Hydraulikdruck im hydraulischen System wird mit einem Hydraulikdruckerzeugungsmittel 7 generiert. Das Hydrauliksystem verfügt über Hydraulikleitungen 71, über die der hydraulische Druck verteilt wird.

In diesem Ausführungsbeispiel sind zwei Anschlüsse an dem Hydraulikzylinder 6 vorgesehen, um beidseitig des Kolbens 62 einen hydraulischen Druck innerhalb des Zylinders 61 aufbauen zu können.

Der Hydraulikzylinder 6 ist hierbei als doppelt wirkender Hydraulikzylinder ausgestaltet, wobei Hydrauliköl in den oberen Bereich des Zylinders 61 des Hydraulikzylinders 6, oberhalb des Kolbens 62 eingebracht werden kann bzw. auch unterhalb des Kolbens 62 in den unteren Zylinderbereich des Zylinders 61 des Hydraulikzylinders 6 eingebracht werden kann.

Beim Einbringen des Hydrauliköls in den unteren Bereich des Zylinders vollzieht der Kolben eine Kolbenbewegung XK, wobei in diesem Fall die obere Blockaufnahme 9 mit den bzw. der Rolle 91 nach oben gezogen wird. Entsprechend erfolgt eine Abwärtsbewegung der oberen Blockaufnahme 9 bei Druckbeaufschlagung des oberhalb des Kolbens befindlichen Zylinderbereichs. Bei einseitig wirkenden Hydraulikzylindern 6 reicht für die Abwärtsbewegung auch eine Absenkung des hydraulischen Drucks aus.

Die einzelnen Hydraulikleitungen 71 können über Ventile 73 angesteuert werden, so dass nur in den gewünschten Bereichen hydraulischer Druck zur Verfügung steht.

In jeder Hydraulikleitung 71 ist bevorzugt kurz vor dem Hydraulikzylinder 6 oder in dem Hydraulikzylinder 6 selbst ein Überdruckventil 72 angeordnet. Dieses Überdruckventil 72 ist einstellbar, so dass dieses nur bei einem bestimmten Druck auslöst und den Druck innerhalb des Hydraulikzylinders so begrenzt. Hierdurch wird das maximale Moment, das von dem hydraulikzylinder 6 erzeugt werden kann, begrenzt.

Das Überdruckventil 72 dient zur Verhinderung des Überziehens des Seils durch zu große Zuführung einer Kraft, die beispielsweise entstehen würde, wenn das Rührwerks 2 am Führungssystem 5 verklemmt bzw. verkantet und sich hierdurch nicht weiterbewegt.

Die untere Blockaufnahme 9 ist mit seinem bzw. seiner Rolle 91 an einem festen Untergrund angeordnet. Die untere Blockaufnahme 9 dient mit seiner Rolle 91 als Umlenkung des Seils und als Widerlager.

Fig. 5 zeigt eine schematische Darstellung des Hydraulikzylinders 6 mit einer Ummantelung.

Die Ummantelung des Hydraulikzylinders 6 besteht mindestens aus zwei Einzelummantelungen. Hierzu ist über dem Zylinder 61 des Hydraulikzylinders 6 eine innere Einzelummantelung 65 angeordnet. Auf der Außenseite der innere Einzelummantelung 65 ist eine Skala 67 aufgebracht. Über diese innere Einzelummantelung 65 ist eine weitere Einzelummantelung, eine äußere Einzelummantelung 66 angeordnet. Die äußere Einzelummantelung 66 ist an der unteren Blockaufnahme 9 fest angeordnet, so dass bei einer Veränderung des Abstands Δx der Blockaufnahmen ein Verschieben der äußeren Einzelummantelung 66 über die innere Einzelummantelung 65 erfolgt.

Beim Verschieben wird bei Erhöhung des Abstands der Blockaufnahmen Δx bei drückender Ausgestaltung des Hydraulikzylinders 6 die Skala 67 weiter frei gegeben oder die Skala 67 wird bei Verringerung des Abstands der Blockaufnahmen Δx bei drückender Ausgestaltung des Hydraulikzylinders 6 weiter abgedeckt. Hieran kann die Höhe des Rührwerks 2 innerhalb des Behälters 3 entweder direkt oder entsprechend eines Faktors abgelesen werden. Die Bestimmung ist auch über entsprechende Sensoren möglich, so dass die Steuerung automatisiert erfolgen kann. Das Rührwerk 2 soll dabei immer unterhalb der Füllstandshöhe HF gehalten werden, damit es überhaupt arbeiten kann.

### Bezugszeichenliste

- 1: Höhenverstellvorrichtung
- 2: Rührwerk
- 3: Behälter
- 4: Flüssigkeit
- 5: Führungssystem
- 6: Linearantrieb, Hydraulikzylinder
- 61: Zylinder
- 62: Kolben
- 63: befestigtes Ende
- 64: distales Ende
- 65: innere Einzelummantelung
- 66: äußere Einzelummantelung
- 67: Skala
- 7: Steuerungsmittel, Hydraulikdruck-Erzeugungsmittel
- 71: Hydraulik-Leitungen
- 72: Überdruckventil
- 73: Ventil
- 8: Seil
- 81: Rührwerksende
- 82: Arbeitsende
- 83: Umlenkrolle
- 84: gasdichte Seildurchführung
- 85: Befestigungspunkt
- 9: Blockaufnahme
- 91: Rolle

- Hmax: maximale Füllstandshöhe
- HF: Füllstandshöhe

- SD: Hub distales Ende
- SP: Hub Kolben
- SR: Hub Rührwerk

- XK: Bewegung Kolben
- XR: Bewegung Rührwerk

- Δx: Abstand Blockaufnahmen

## Patentansprüche

1. Höhenverstellvorrichtung (1) mit einem Führungssystem (5) und einem Höhenverstellmittel für ein Rührwerk (2) oder Pumpwerk, wobei das Rührwerk (2) oder Pumpwerk in einem Behälter (3), nämlich einem Lagertank, einem Klärbehälter, einem Gärbehälter, insbesondere einem Fermenter, oder dergleichen, gefüllt mit einer zu rührenden oder zu pumpenden Flüssigkeit (4), innerhalb der Flüssigkeit (4) angeordnet ist und das Rührwerk (2) oder Pumpwerk an dem Führungssystem (5) mit dem Höhenverstellmittel in der Höhe verstellbar ist, **dadurch gekennzeichnet, dass** das Höhenverstellmittel einen Linearantrieb mit einem außerhalb des Behälters (3) angeordnete Steuerungsmittel (7) ist, wobei ein befestigtes Ende (63) des Linearantriebs (6) in einer ortsfesten Aufnahme angeordnet ist und ein distales Ende (64), gegenüber dem befestigten Ende (63) des Linearantriebs (6), über eine Wirkverbindung mit dem Rührwerk (2) oder Pumpwerk verbunden ist.

2. Höhenverstellvorrichtung (1) nach Anspruch 1, **dadurch gekennzeichnet, dass** der Linearantrieb ein Hydraulikzylinder (6) und das Steuerungsmittel ein Hydraulikdruck-Erzeugungsmittel (7) ist.

3. Höhenverstellvorrichtung (1) nach Anspruch 2, **dadurch gekennzeichnet, dass** ein einstellbares Überdruckventil (72) zur Begrenzung der Kraft des Hydraulikzylinders (6) innerhalb des Hydraulik-Systems angeordnet ist.

4. Höhenverstellvorrichtung (1) nach Anspruch 2 oder 3, **dadurch gekennzeichnet, dass** das Hydraulikdruck-Erzeugungsmittel (7) eine handbetriebene Pumpe, ein Hydraulikaggregat und/oder ein hydraulischer Druckspeicher ist, wobei das Hydraulikaggregat ein elektro-hydraulisches oder ein pneumatisch-hydraulisches Hydraulikaggregat ist.

5. Höhenverstellvorrichtung (1) nach Anspruch 2, 3 oder 4, **dadurch gekennzeichnet, dass** das Hydraulikdruck-Erzeugungsmittel (7) mit mehreren Hydraulikzylindern (6) verbunden ist, wobei jeweils einzeln ansteuerbare Ventile (73) zwischen den jeweiligen Hydraulikzylindern (6) und dem Hydraulikdruck-Erzeugungsmittel (7) angeordnet sind.

6. Höhenverstellvorrichtung (1) nach einem der Ansprüche 2 bis 5, **dadurch gekennzeichnet, dass** der Hydraulikzylinder (6) eine Schutzummantelung aufweist, wobei die Schutzummantelung wenigstens zwei übereinanderschiebbare Einzelummantelungen, nämlich mindestens eine innere (65) und äußere Einzelummantelung (66), umfasst.

7. Höhenverstellvorrichtung (1) nach Anspruch 6, **dadurch gekennzeichnet, dass** an dem Hydraulikzylinder (6), bevorzugt auf einer der Einzelummantelungen (65, 66), besonders bevorzugt auf der Außenseite der inneren Einzelummantelung (65), eine Skala (67) aufgebracht ist, die den Hub (SD/SR/SP) anzeigt.

8. Höhenverstellvorrichtung (1) nach einem der Ansprüche 1 bis 7, **dadurch gekennzeichnet, dass** die Wirkverbindung mindestens eine Umlenkvorrichtung aufweist.

9. Höhenverstellvorrichtung (1) nach einem der Ansprüche 2 bis 8, **dadurch gekennzeichnet, dass** die Wirkverbindung ein Seil (8) mit einem Rührwerksende (81) und einem Arbeitsende (82) ist.

10. Höhenverstellvorrichtung (1) nach Anspruch 9, **dadurch gekennzeichnet, dass** das Rührwerksende (81) an dem Rührwerk (2) oder Pumpwerk und das Arbeitsende (82) an dem distalen Ende (64) des Hydraulikzylinders (6) befestigt ist.

11. Höhenvorstellvorrichtung (1) nach Anspruch 9, **dadurch gekennzeichnet, dass** das Rührwerksende (81) an dem Rührwerk (2) oder Pumpwerk und das Arbeitsende (82) an einem ortsfesten Haltepunkt (85) befestigt ist, bevorzugt am Behälter (3), am Boden, an einem Halter, am Zylinder (61) des Hydraulikzylinders (6) oder an der ortsfesten Aufnahme des Hydraulikzylinders (6), und am distalen Ende (64) des Hydraulikzylinders (6) eine erste Blockaufnahme (9), umfassend eine Rolle (91), angeorndet ist, wobei das Seil (8) U-förmig um die Rolle (91) geführt ist.

12. Höhenverstellvorrichtung (1) nach Anspruch 10, **dadurch gekennzeichnet, dass** neben der ersten Blockaufnahme (9) am distalen Ende (64) des Hydraulikzylinders (6) eine zweite Blockaufnahme (9) am befestigten Ende (63) des Hydraulikzylinders (6) vorgesehen ist, wobei die erste (9) und zweite Blockaufnahme (9) jeweils mindestens eine Rolle (91) aufweist und das Seil (8) über die Rollen (91) in entsprechender Einscherung geführt ist, so dass ein Flaschenzug ausgebildet ist, wobei der Abstand der Blockaufnahmen (Δx) durch den Hydraulikzylinder (6) veränderbar ist.

13. Höhenverstellvorrichtung (1) nach Anspruch 9, 10 oder 11, **dadurch gekennzeichnet, dass** die Umlenkvorrichtung für das Seil (8) mindestens eine Umlenkrolle (83) ist.

14. Höhenverstellvorrichtung (1) nach einem der Ansprüche 8 bis 11, **dadurch gekennzeichnet, dass** der Hydraulikzylinder (6) außerhalb des Behälters (3) angeordnet ist und eine gasdichte Seildurchführung (84) in dem Behälter (3) vorgesehen ist.
